# EUROPEAN PATENT SPECIFICATION

(11) **EP 3 336 782 B1**
(45) Date of publication and mention of the grant of the patent: **04.03.2020**
(21) Application number: 16203862.4
(22) Date of filing: 13.12.2016
(51) Int. Cl.: G06Q 10/08, H04W 48/08, H04W 72/02

(54) **METHOD FOR GEOGRAPHIC-BASED RADIOFREQUENCY BAND SELECTION**
VERFAHREN ZUR GEOGRAFIEBASIERTEN HOCHFREQUENZBANDAUSWAHL
PROCÉDÉ DE SÉLECTION DE BANDE DE RADIOFRÉQUENCES EN FONCTION DE LA POSITION GÉOGRAPHIQUE

(43) Date of publication of application: 20.06.2018
(73) Proprietor: TRAXENS, 13013 Marseille (FR)
(72) Inventor: GUZZO, Natale, 13001 Marseille (FR); DARAGON, Pascal, 13850 Greaque (FR); FALLAH, Michel, 13400 Aubagne (FR); BECHA, Hanane, 13090 Aix en Provence (FR)
(74) Representative: Verriest, Philippe

(56) References cited:
- WO-A1-2012/138800
- US-A1- 2006 200 560
- US-A1- 2012 009 874
- US-A1- 2013 100 986

## Description

### TECHNICAL FIELD OF THE INVENTION

This invention relates to the field of selection or allocation of wireless resources. More specifically, this invention deals with methods for wireless tracking of assets. More particularly, the present invention relates to optimizing battery life and network resources during position tracking by automatic geographic-based frequency band selection.

### BACKGROUND

Numerous physical devices or items comprising sensors and, network connectivity are capable of collecting and sharing information about their own conditions and their surroundings. They may also autonomously adapt their behavior to the context. In addition to being context-aware, these items empower their end-users to change their status remotely using different communication protocols and technologies.

An example of network connectivity is, for instance, the international application WO2016005675 which is about a joining method, the international application WO2016151259 which describes a communication method within a network of wireless communicating electronic devices making it possible to dynamically and automatically control the propagation of enrolment messages or the international application WO2016083745 which discloses a method implemented by a communicating electronic device acting as a free node and can request a procedure for affiliation with a second device. US2012/0009874 discloses a method for determining allowed channels in unlicensed bandwidth depending on the current position. WO2012138800 shows a method for communicating in TV white space spectrum.

Connectivity is a prerequisite for tracking and monitoring solutions. The Item tracking and monitoring solution should provide interconnectivity between items and enable the tracking device to communicate, in a very energy efficient manner, with the terminal server anytime and anywhere, with a limited the cost.

Cellular networks and satellite communication technologies offer many advantages such as scalability and a global reach. However, such technologies require a significant electrical power and are costly. Therefore, they should be used as complementary communication solutions to the radio communication solution that mutualizes the energy usage when there is a cluster of devices and offer a better coverage for devices that have no line of sight.

Indeed, unlike automotive and other machine-to-machine devices, the smart containers are extremely energy constrained by nature. Dry containers do not have any power source and Reefer containers are not permanently powered on. Once the mobile device leaves the factory, it may be almost impossible to change or to charge the battery of the mobile device. The mobile device may be associated with a container and this container may be deployed globally and may move worldwide, e.g. crossing borders, in an unpredictable fashion. From there on, it may be out of reach without any physical access that permits maintenance or repairing.

Moreover, container selection and usage may be completely random. In some case, containers may be arranged in stacks or, on cargo vessels, stowed underdeck Therefore, a tracking device located on a container may not be able to communicate via cellular technologies signal may be too weak. In such case, the mobile device may rapidly discharge its battery while trying to communicate and reduce its lifetime.

In addition, the terminal server may not be able to leverage mobile devices and enable customers to customize the behavior of mobile devices and define notification rules to forward information. Terminal servers may also not be able to leverages mobile devices computing power by sending them journey specific control rules such as detecting unexpected sensor values or unexpected events.

This invention relates to a solution to the previous problems by grouping a series of strategies to automatically select the frequency band to use in the communication between mobile devices. The proper frequency band is selected according to the current geographic position of the communicating device and the Short Radio Devices regulations in force in the traversed country.

### SUMMARY OF THE INVENTION

In order to achieve this objective, the present invention provides a method for data communication of a mobile device on a local area network, having a mobile device communication system, on an authorized radiofrequency band according to the appended claims.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:
- figure 1 represents a system for tracking containers;
- figure 2 shows a mobile device able to implement the method for data communication;
- figure 3 illustrates an example of a data frame exchange comprising a data communication mode; and,
- figure 4 represents a method for data communication.

### DESCRIPTION OF THE INVENTION

### SYSTEM FOR MULTI-FREQUENCIES RADIO COMMUNICATION

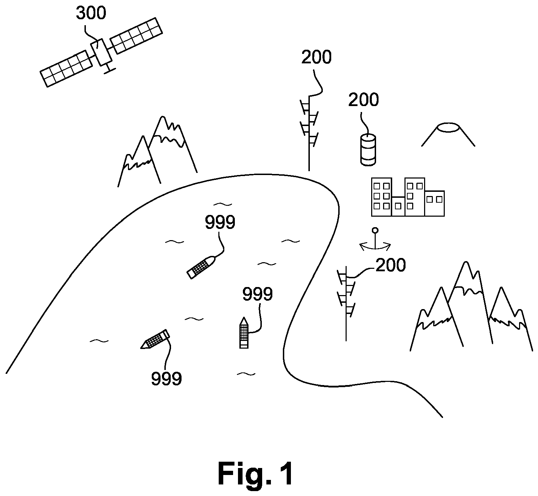

FIG. 1 illustrates a non-limiting example where autonomous energy capacity and mobile network can be optimized during position tracking. Of course, the method according to the invention could be applied to other types of mobile devices than tracking devices, like sensor communicating physical parameters.

FIG. 1 shows three container ships carrying multiple containers 999. Each container 999 comprises a mobile device 100, having a cellular mobile device system 110.

The container may be delivered by a container ship operator or another transport service. Any stakeholder involved in the transport chain (e.g., container owner or leaser, cargo owner, etc.) may wish to track a container **999** in order to determine the container **999** position and monitor its related physical parameters.

Mobile device **100** may provide relevant value for all transport chain stakeholders. The data collected by mobile device **100** may be beneficial to the cargo owner, the container owner, customs and regulatory authorities, and facilitate the onboard vessel monitoring and the ports and/or terminals management. This may increase visibility and may allow improving the logistics chain management, simplifying the Reefer monitoring on board of vessels, modernizing the terminals and increasing its efficiency, and enhancing the overall cargo transport security.

The container owner may desire to know with great accuracy when the container **999** may arrive and also whether the container underwent vibrations, the door has been opened, the atmospheric conditions are in ranges and so on.

These different values should be transmitted from the mobile device **100** to the terminal **200** via different communication technologies such as radio, cellular and satellite communication technologies. In order to have a better coverage and mutualize energy usage, radio communication is deployed as a complementary communication solution in addition to cellular and/or satellite communication technologies. In fact, radio communication enables better coverage by enabling devices that are the bottom of the deck for example and have no line of sight to communicate using different devices via multi-hoping radio communication. In addition, when cellular communication technologies are I used, the scan and attach steps to select a network are the most costly steps in terms of energy consumption. One can consider selecting a leader out of the available devices that will receive the data from its neighboring devices and send it in their behalf using different communication technology that is more energy consuming than radio communication. Hence, the energy deployed to scan and attach to a network will be consumed once instead of being consumed by all the devices within the cluster. However, it is not simple to employ radio communication for mobile devices that are deployed in harsh highly metallic environments and are frequently roaming. It is well known that frequency band to use for communication, or rather radio communication is different from a region to another.

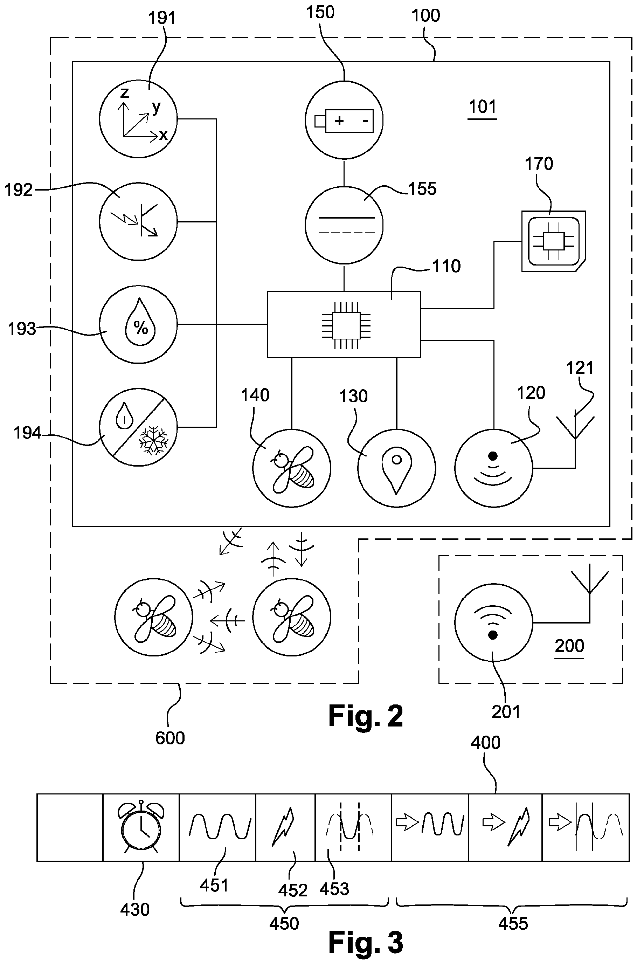

Therefore, the mobile device **100** needs a series of strategies to automatically select the most appropriate frequency band to use in the communication with other mobile devices **100.** These series of strategies are operated by the mobile device system **110,** which is represented in FIG. 2. The frequency band is selected according to the current geographic position of the mobile device **100** and the Short Radio Devices regulations.

The Short Range Devices, SRD for short, is a recommendation which describes radio frequency transmitter devices used in telecommunication for the transmission of information, which have low capability of causing harmful interference to other radio equipment.

In order to be able to operate worldwide, mobile devices **100** may employ different frequency bands. As today, three different frequency bands which are the 433.05 - 434.79 MHz band, 433 MHz for short, the 868.0 - 870.0 MHz band, usually abbreviated to 868 MHz, and the 902 - 928 MHz band, which by convention, is abbreviated to 915 MHz can be sufficient to communication worldwide.

Such frequency bands are differently regulated by national and international standards. In order to manage the global frequency allocation, International Telecommunication Union divides the world into three regions. The proposed strategy to select the most appropriate frequency band can be adapted if new frequency bands become acceptable in the future.

For instance, in a harbor of Region 1 like Marseille, the mobile device may use the 433 MHz and the 868 MHz band for communication but it is not allowed to use the 915 MHz band. The first region may have some exception for the 915 MHz band like South Africa, since the country may allow the use of the 915 MHz band for communication.

The availability of the most common frequency bands dedicated to SRD in International Telecommunication Union Regions is reported in Table 1.

| Table 1: SRD frequency bands | | | |
|---|---|---|---|
| Band | Region 1 | Region 2 | Region 3 |
| 433 MHz | Available | Available with strong limitations | Available in most of the countries with strong limitations in IN, JP and KR |
| 868 MHz | Available | Not available | Available in some countries (RU, IN, PH) |
| 915 MHz | Available only in ZA | Available | Available in most of the countries (except IN and PH) |

### MOBILE DEVICE ARCHITECTURE

FIG. 1 is a block diagram of a mobile terminal 100 which may include a mobile terminal system **101** which communicates through a wireless communication network **200.** Mobile terminal system **101** may comprise an accelerometer sensor **191,** a light sensor **192,** a hydrometer sensor **193** and a temperature sensor **194,** each of them may be coupled to a controller **110.** Controller **110** may be also coupled to radio frequency transceiver circuit **120,** transceiver **120** for short and an antenna 121. Typically, controller **110** may represent a central processing unit which runs operating system software in a memory component (not shown). Controller **110** may normally control the operation of mobile terminal **100** and the signal processing operations associated with communication functions may be typically performed in transceiver circuit **120.** Transceiver circuit **120** interfaces with antenna **121** in order to receive or transmit information.

Mobile terminal **100** may send communication signals to and receive communication signals from mobile network **200** via antenna **121.** Transceiver circuit **120** may perform functions similar to those of station terminal **200,** including for example modulation/demodulation and possibly encoding/decoding and encryption/decryption.

Mobile terminal **100** may operate using at least one SIM card **170** which may be connected to or inserted in mobile terminal **100** at a SIM card interface (not shown). A SIM card **170** may be a Universal Integrated Circuit Card (UICC) loaded with one or multiple network operators' profiles. SIM card **170** may be one type of a removable identity card used to identify a mobile terminal or a container and to personalize the device, among other things. SIM card **170** may store additional user information for the mobile terminal as well, including logbook and for information.

Mobile terminal **100** may communicate in and through wireless communication network **200.** Wireless communication network **200** may be a classical networkular telecommunications network. In the embodiment of FIG. 1, wireless network **200** may be configured in accordance with cellular radio network technologies of 2^{nd} to 5^{th} generation.

Mobile terminal **100** may include a communication unit **140** comprising an additional transceiver circuit and antenna to communicate on a wireless local area network and in particular with other mobile terminal of a cluster as will described below.

Mobile terminal **100** may include a satellite-based positioning system receiver **130** coupled to controller **110**. The corresponding satellite-based positioning system may be Glonass, Galileo or GPS for example.

Mobile terminal **100** may include an autonomous energy capacity or one or more rechargeable or non rechargeable batteries **150.** We will refer globally to this energy supply as battery **150.** Battery **150** may supply electrical power to electrical circuit in mobile terminal **100.** Battery **150** may be coupled to a power regulator **155** which may regulate power to the device. When mobile terminal **100** is operational, the transceiver circuit **120** may be turned on only when it may be sending to network, and may be otherwise turned off to conserve resources and in particular the autonomous energy capacity **150.** Similarly, a receiver of transceiver circuit **120** may be typically periodically turned off to conserve power until it may be needed to receive signals or information.

### LAN/CLUSTER DESCRIPTION

When multiple mobile terminal **100** are present within reach of communication unit **140,** a local area network is defined.

The local area network **600** comprises at least one cluster which includes a set of mobile devices **100.** A head node or leader node may be defined as well as member node. The logic for defining such a cluster and head/member nodes is described in previous patent applications WO2016005675, WO2016151259 and WO2016083745.

The header node may be in better position to perform communication with a wireless communication network compared with member nodes (having more energy, a better coverage or a better signal strength). The head node will take responsibility to communicate with said wireless communication network 200 on behalf of the cluster while communicating to the member nodes through the local area network **600.**

### DATA COMMUNICATION MODE

The mobile device may specify customizable operating modes in order to be in conformity with most of international and regional regulations. Said modes can be defined as a data communication mode **450.**

A data communication mode **450** may define at least a radiofrequency band **451** for communicating data. A data communication mode **450** may also define at least a transmission power **452** information in relation with said radiofrequency band for communicating data. A data communication mode **450** may also define sub bands **453** within the radiofrequency band **451.**

The data communication mode may be defined, for example, by a 1-Byte parameter which is composed by different fields as illustrated in Table 1.

**Table 1: PHY_MODE 450 parameter format**

| | | | | | | | |
|---|---|---|---|---|---|---|---|
| 7 | 6 | 5 | 4 | 3 | 2 | 1 | 0 |
| Band | | Txpwr | | Sub-band | | | |
| 2 bits | | 2 bits | | 4 bits | | | |

The main frequency band is selected by the first 2 bits of the data communication mode parameter. The possible values are reported in Table **2.**

**Table 2: Band values**

| Value | Band | Description |
|---|---|---|
| 0 | 433MHz | From 433.05MHz to 434.700MHz |
| 1 | 868MHz | From 868MHz to 870MHz |
| 2 | 915MHz | From 915MHz to 928MHz |
| 3 | SILENT | No frequency bands defined: mobile device is not allowed to transmit. |

Table **3** defines an example of possible values of transmission power that can be selected with the last 2 bits, positions 4 and 5, of the data communication mode parameter.

**Table 3**

| Value | Txpwr |
|---|---|
| 0 | 13 dBm |
| 1 | 10 dBm |
| 2 | 0 dBm |
| 3 | -10 dBm |

The sub-frequency-band is defined by 4 bits, positions 0 to 3, of the data communication mode parameter. Thus, mobile device can define up to 16 sub-bands for each main band. The different sub-bands are illustrated below.

The data communication mode allows customizing the physical layer of mobile device by selecting the frequency band and the maximum permitted transmission power. Thus, a set of operating modes can be defined to comply with the international and regional regulations in force in the worldwide. Table **4** provides some examples.

**Table 4**

| Mode | Band **451** | Txpwr **452** | Sub-band **453** | PHY_MODE **450** |
|---|---|---|---|---|
| ETSI 868MHz | 1 | 0 | 0 | 0x40 |
| | | | | 01\|00\|0000 |
| FCC 915MHz | 2 | 0 | 0 | 0x80 |
| | | | | 10\|0000\|00 |
| ARIB 915MHz | 2 | 0 | 1 | 0x81 |
| | | | | 10\|00\|0001 |
| Korea 917MHz | 2 | 2 | 3 | 0xA3 |
| | | | | 10\|10\|0011 |
| ETSI 433MHz | 0 | 1 | 0 | 0x10 |
| | | | | 00\|01\|0000 |

Mobile devices **100** transiting from a region to another should be able to automatically switch to the proper frequency band **451** in compliance with the local SRD regulations.

The data communication mode **450** is associated with a validity time period **430.** For example, the validity time period may be expressed in periods of 30 minutes for example. If the current time **410** exceed the validity period **430,** the data communication mode **450** is not valid anymore. In such case, the obtained data communication mode **450** is considered unreliable.

### METHOD FOR DATA COMMUNICATION OF A MOBILE DEVICE

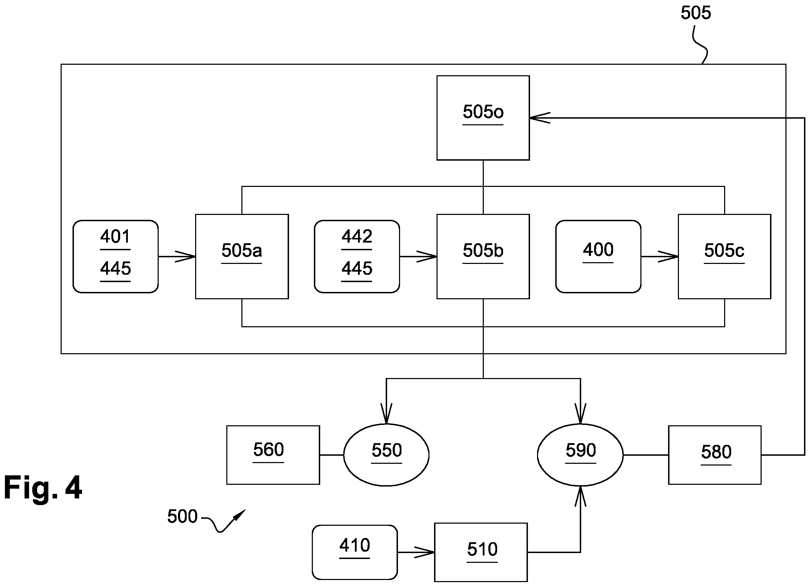

Figure 4 illustrates a method for data communication **500** operated by the mobile device communication system **110** of mobile device **100.**

The method **500** comprises a step of determining **505** a data communication mode **450.**

The determination **505** of said data communication mode is initiated in sub-step **505o** and may be performed according to different possibilities.

According to a first possibility corresponding to sub-step **505a,** the data communication mode is determined based on a piece of geographical localization information **441** obtained from a mobile communication network **200.** The piece of geographical localization information obtained from a mobile communication network **600** may be a mobile country code **441.** Therefore, the sub-step 505a is performed using a repository **445** defining values of data communication modes **450** corresponding to geographical areas. The repository **445** may have the form of a table for example. This repository **445** may be stored in the host mobile device may be used in this case to identify the Country corresponding to the piece of geographical localization information or the mobile country code **441** obtained, for example, from the GSM network. The geographical area may be determined by converting the piece of geographical localization information obtained from the mobile communication network or the satellite-based positioning system. This repository **445** might be updated by a remote server. The definition of some macro regions such as Europe can be applied to reduce the overall size of this table.

According to a second possibility corresponding to sub-step **505b,** the data communication mode is determined based on a piece of geographical localization information **442** obtained from a satellite-based positioning system **130.** In such case the repository **445** may be also built with geographical localization information obtained the satellite-based positioning system **442.** As the geographical localization information may be redundant, the method **500** may comprise a step of compression in order to reduce or suppress the redundant piece of geographical localization information. The repository **445** may be then compressed by applying a definition of some macro-regions, such as Europe, or by using a Run-length encoding in order to suppress redundant piece of information.

According to a third possibility corresponding to sub-step **505c,** the data communication mode is determined based a data communication mode **450** obtained from the data frame exchange **400** on said local area network as shown on figure 3. The mobile device **100** may try to retrieve a data communication mode **450** defined by other nodes in the local area network **600.** The mobile device communication system **110** of a mobile device **100** can obtain the network data communication **mode 455** by reading the network data communication mode **455** in different manners. The host mobile device is in charge to keep up-to-date said data communication mode **450.**

If the determination step is successful the data communication state 550 of the mobile device **100** is enabled. In this data communication state, a radiofrequency band **451** defined on the basis of said data communication mode **450** for data communication between the mobile device **100** and the local area network **600** is allowed. Otherwise, if the determination step failed such that no valid data communication mode can be determined, the mobile device **100** enters a silent state **590.** However, the mobile device **100** is allowed to listen to special channels dedicated to the broadcast of the data communication mode **450** in the network, i.e. it enters a sniffer mode **580.**

If the determination step is successful, the mobile device 100 may also communicate the data communication mode **450** to other mobile devices 100 in the local area network in a step **560.**

The method **500** also comprises a step **510** of verifying the validity of the data communication mode **450** based on a current time **410** and the validity period **430.** If the current time **410** exceed the validity period **430,** the data communication mode **450** is not valid anymore. In such case, the mobile device **100,** or the host mobile device of the local area network **600** sets the data communication mode **450** to "SILENT" such as to enter the silent state **590.** Consequently, the radio module enters the silent state **590** in which it is not allowed to transmit. The device also enters a sniffer mode **580.**

The validity time **430** can be computed by the host mobile device **100** of the local area network **600** that is typically a mobile device **100** having a mobile communication network connection **120,** like GSM, or the capability of acquiring its satellite-based position **130** by satellite-based positioning system like GPS, Galileo and Glonass for example. The host mobile device can set the validity time **430** to a value comprised between 1 and 6.5 hours, for instance, and should compute the probability that the local area network **600** passes from a country to another and taking account of the type of node.

If a new data communication mode **450** is expected at the end of the validity time **430,** the intended mobile device **100** enters a silent state **590** and the sniffer mode **580.** Indeed, when the validity time **430** of the current data communication mode **450** expires, the mobile device **100** tries to retrieve a new data communication mode **450** either using the GSM connection, the LAN connection or the GPS position as mentioned before.

### SNIFFER MODE

To recover silent nodes, a secondary beacon channel, for example, may have been defined in the two bands 868MHz and 915MHz on the frequencies reported in Table **5.**

**Table 5: Sniffer frequencies**

| Band | Center frequency |
|---|---|
| 868MHz | 866.05MHz |
| 915MHz | 922.615MHz |
| 433MHz | 433.92MHz |

Such frequencies have been selected by identifying the portions of frequency bands **451** most commonly permitted by international and regional SRD regulations. Every 15 minutes, each Mobile device having a valid data communication mode **450** transmits a message on a channel of the current band using the maximum permitted transmission power **452.** The message contains the current position **440** of the source, the current data communication mode **450,** the validity time **430** and the next data communication mode **450.**

The sniffer node **580** permanently listens to the defined network data communication mode **455** channels trying to intercept a network data communication mode **455** message broadcast by its neighbors. The sniffer frequencies are cycled with a period of 20 minutes, for example, which ensures to intercept a network data communication mode **455** message when only a neighbor is in the communication range. In the worst case, a non-isolated sniffer node **580** receives a network data communication mode **455** message after 1 hour, for example.

The first network data communication mode **455** channel scanned by the sniffer mode **580** is that indicated by the last network data communication mode **455** stored in memory. A mobile device **100** is allowed to transmit network data communication mode **455** messages only if its validity time **430** is greater than half an hour, for example. This restriction prevents the formation of possible loops in which two mobile devices update each other with an inconsistent validity time **430,** for example.

### HEAD AND MEMBER NODES STRATEGY

The strategy adopted by mobile device mainly depends on their status in the network. Some mobile devices, which have access to other computers on the local area network **600,** are called head nodes or host node. The head nodes have GSM connection and use the piece of geographical localization information, like mobile country code **441** for example, to compute the current data communication mode **450.** As a result, they become the network data communication mode **455** sources and are in charge of broadcasting the current data communication mode **450** in HANN messages in step **560.** If the head node is capable to acquire the piece of geographical localization information by GPS, then it becomes a geographical localization information source as well.

A normal mobile device, also called member nodes, use the network data communication mode **455** unless they have a valid piece of geographical localization information. In the latter case, they use it until its expiration and then use the network data communication mode **455** and the piece of geographical localization information contained in the received HANN messages without trying to acquire a new piece of geographical localization information by GPS. However, if the hosting head node is not a geographical localization information source then the members can attempt to acquire the piece of geographical localization information by themselves.

Similar to members, there is affiliate nodes. The affiliate nodes use the network data communication mode **455** unless they have a valid piece of geographical localization information. In the latter case, they use it until its expiration and then use the network data communication mode **455** and the piece of geographical localization information contained in the received REP messages without trying to acquire a new piece of geographical localization information by GPS. However, if the hosting member has an undefined piece of geographical localization information, like zeros or a blank position, affiliates can attempt to acquire the piece of geographical localization information by themselves.

In some case, the mobile device may be defined as loose node. The loose nodes use the network data communication mode **455** unless they have a valid piece of geographical localization information. In the latter case, they use it until its expiration and then attempt to acquire a new piece of geographical localization information. If they fail, then enter in sniffer mode and try to acquire a valid network data communication mode **455.**

When a change of data communication mode **450** is expected, because of the transition from a region to another for example, all network nodes involved in this transition should switch to the proper Data communication mode **450** at the right moment without invading forbidden frequencies. For this reason, a node cannot directly switch to the next data communication mode **450** at the expiration of the validity time **430.** Actually, the only way to be sure that the new data communication mode **450** is presently in force in the current geographical localization **440** is through the acquisition of a new data communication mode **450.** Hence, the method **500** comprises a step of communicating to at least one node a next data communication mode **450.**

As explained in the previous paragraphs head nodes acquire it by mobile communication network and non-head nodes by the reception of a network data communication mode **455** message while in sniffer mode **580.** As a result, the transition from a region to another causes an interruption of the normal network operations in nodes (transition blackout) which may last until 1 hour. Therefore, the piece of geographical localization information comprises the next geographical localization information and this next geographical localization information is obtained by extrapolation of the geographical localization.

In some cases it may be possible to switch to the next data communication mode **450** before entering in a new region in order to prevent the transition blackout. Below we present two possible scenarios in which this approach can be applied.

One of these scenarios may be when a container ship is transiting from international waters to national waters. Since no specific regulations are defined in international waters, it would be possible to switch to the next data communication mode **450** before entering in the approaching national waters.

The other scenario may be when regional regulations are less stringent in proximity of the borders. In these cases, mobile devices may switch to the next data communication mode **450** before entering in the new region. If a head node expects to enter in a new region in less than half an hour and if one of the above mentioned cases are identified, then the hard switching can be applied. The hard switching consists of broadcasting a new HANN indicating the next data communication mode **450** as the one currently in use. All members receiving such a HANN message will then directly switch to the indicated data communication mode **450** without entering in sniffer mode **580** or silent state **590.**

However, for affiliate nodes the hard switching is not applicable. The steps involved in this procedure are the following:
1. The host device in the head node updates the data communication mode **450;**
2. The host device in the head node commands the sending of a HANN message;
3. The host device in the head node switches to the new data communication mode **450.**

### REMOTE SENSORS

Remote sensors have neither mobile communication network module nor satellite-based positioning module. Thus the only ways to obtain the network data communication mode **455** and update its validity time **430** is either to receive a Sub-Sensor Network Update message from the parent mobile device or receive a network data communication mode **455** message in sniffer mode **590.**

Thus, a remote sensor behaves like a mobile device without mobile communication network module nor satellite-based positioning module: it becomes silent when it has not information about the data communication mode **450** presently in force and it enters in sniffer mode and cycles the network data communication mode **455** frequencies in order to intercept a network data communication mode **455** message.

In case of Hard switching, a mobile device updates the data communication mode **450** in the sensors of its Sub-Sensor Network before switching to the new data communication mode **450.** To do so, a Sub-Sensor Network Update is transmitted with the new data communication mode **450** and all sensors receiving it switches immediately to the indicated data communication mode **450** without entering in sniffer mode. In this way, the Hard Switching is applied also to the Sub-Sensor Network of the involved mobile devices. The Sub-Sensor Network Update is a message broadcast by the parent mobile device every hour using the dedicated Sub-Sensor Network beacon channel to keep up-to-date the data communication mode **450** and the timestamp in the attached sensors.

## Claims

1. Method (500) for data communication of a mobile device on a local area network (600), having a mobile device communication system, on an authorized radiofrequency band (451); the method (500) comprising the following steps:
- determining (505) a current data communication mode (450), said current data communication mode (450) defining at least a radiofrequency band (451) for communicating data; said determination (505) of said data communication mode (450) being performed using:
a) a piece of geographical localization information obtained from a mobile communication network (200) or a satellite-based positioning system (300); or
b) a data communication mode (450) obtained from a data frame exchange (400) on said local area network (600);
- if the determination step is successful:
∘ enabling (550) a data communication state of the mobile device wherein use of a radiofrequency band (451) defined on the basis of said current data communication mode (450) for data communication between the mobile device and the local area network (600) is allowed; or,
- if the determination step is not successful such that no valid data communication mode (450) can be determined:
∘ entering a silent state (590); and
∘ entering a sniffer mode (580);
wherein the current data communication mode (450) is associated with a validity time period (430) and wherein the method (500) further comprises the following steps :
- verifying (510) a validity of the current data communication mode (450) based on a current time (410) and the validity period (420), and entering a silent state (590) and or a determination step (505) if the result of the verification step is not successful,
- receiving the validity time period (430) for the current data communication mode (450) in network messages from a current leader node of the local area network (600),
- updating the validity time of the current data communication mode according to the information transmitted by the current leader node in the local area network,
- immediately enabling the new data communication mode (455) communicated by the current leader node of the local area network.

2. Method (500) according to any of claim 1, wherein the sniffer mode corresponds to a step of listening (580) to at least one dedicated channel for the reception of at least one network message comprising a current data communication mode (450) and/or a next communication mode (455).

3. Method (500) according to claim 2, comprising a step of receiving at least one dedicated network message comprising a current data communication mode (450) and/or a next communication mode (455).

4. Method (500) according to any of claims 2 or 3, wherein the at least one message comprises a validity time period (430) associated with the current communication mode (450).

5. Method (500) according to any of claims 1 to 4, wherein the step of determination (505) of said data communication mode (450) being performed using a piece of geographical localization information is performed using a repository (445) defining values of data communication modes (450) corresponding to geographical areas.

6. Method (500) according to any of claims 1 to 5, comprising a step of communicating (560) to at least one node on the local area network (600) a current or next data communication mode (455) in at least one network message.

## Patentansprüche

1. Verfahren (500) zur Datenkommunikation einer mobilen Vorrichtung in einem lokalen Netzwerk (600), ein Kommunikationssystem einer mobilen Vorrichtung aufweisend, in einem autorisierten Funkfrequenzband (451); wobei das Verfahren (500) die folgenden Schritte umfasst:
- Bestimmen (505) eines aktuellen Datenkommunikationsmodus (450), wobei der aktuelle Datenkommunikationsmodus (450) mindestens ein Funkfrequenzband (451) zum Kommunizieren von Daten definiert; wobei das Bestimmen (505) des Datenkommunikationsmodus (450) ausgeführt wird, unter Verwendung:
a) einer geografischen Lokalisierungsinformation, die von einem Mobilkommunikationsnetzwerk (200) oder einem satellitenbasierten Positionierungssystem (300) erhalten wird; oder
b) eines Datenkommunikationsmodus (450), der von einem Datenrahmenaustausch (400) in dem lokalen Netzwerk (600) erhalten wird;
- falls der Bestimmungsschritt erfolgreich ist:
° Aktivieren (550) eines Datenkommunikationszustands der mobilen Vorrichtung, wobei die Verwendung eines Funkfrequenzbandes (451), das auf der Basis des aktuellen Datenkommunikationsmodus (450) zur Datenkommunikation zwischen der mobilen Vorrichtung und dem lokalen Netzwerk (600) definiert wird, erlaubt ist; oder,
- falls der Bestimmungsschritt nicht erfolgreich ist, sodass kein gültiger Datenkommunikationsmodus (450) bestimmt werden kann:
° Eintreten in einen stummen Zustand (590); und
° Eintreten in einen Sniffer-Modus (580);
wobei der aktuelle Datenkommunikationsmodus (450) mit einem Gültigkeitszeitraum (430) verknüpft ist, und wobei das Verfahren (500) weiter die folgenden Schritte umfasst:
- Überprüfen (510) einer Gültigkeit des aktuellen Datenkommunikationsmodus (450) basierend auf einer aktuellen Zeit (410) und dem Gültigkeitszeitraum (420), und Eintreten in einen stummen Zustand (590) und oder in einen Bestimmungsschritt (505), falls das Ergebnis des Überprüfungsschritts nicht erfolgreich ist,
- Empfangen des Gültigkeitszeitraums (430) für den aktuellen Datenkommunikationsmodus (450) in Netzwerknachrichten von einem aktuellen Führungslinienknoten des lokalen Netzwerks (600),
- Aktualisieren der Gültigkeitszeit des aktuellen Datenkommunikationsmodus gemäß der Information, die durch den aktuellen Führungslinienknoten in dem lokalen Netzwerk übertragen wird,
- Unmittelbares Aktivieren des neuen Datenkommunikationsmodus (455), der von dem aktuellen Führungslinienknoten des lokalen Netzwerks kommuniziert wird.

2. Verfahren (500) nach einem von Anspruch 1, wobei der Sniffer-Modus einem Schritt des Abhörens (580) mindestens eines gewidmeten Kanals für den Empfang mindestens einer Netzwerknachricht entspricht, die einen aktuellen Datenkommunikationsmodus (450) und/oder einen nächsten Kommunikationsmodus (455) umfasst.

3. Verfahren (500) nach Anspruch 2, einen Schritt des Empfangens mindestens einer gewidmeten Netzwerknachricht umfassend, die einen aktuellen Datenkommunikationsmodus (450) und/oder einen nächsten Kommunikationsmodus (455) umfasst.

4. Verfahren (500) nach einem der Ansprüche 2 oder 3, wobei die mindestens eine Nachricht einen Gültigkeitszeitraum (430) umfasst, der mit dem aktuellen Kommunikationsmodus (450) verknüpft ist.

5. Verfahren (500) nach einem der Ansprüche 1 bis 4, wobei der Schritt des Bestimmens (505) des Datenkommunikationsmodus (450), der unter Verwendung einer geografischen Lokalisierungsinformation durchgeführt wird, unter Verwendung eines Repositorys (445) durchgeführt wird, der Werte von Datenkommunikationsmodi (450) definiert, die geografischen Gebieten entsprechen.

6. Verfahren (500) nach einem der Ansprüche 1 bis 5, das einen Schritt des Kommunizierens (560) zu mindestens einem Knoten im lokalen Netzwerk (600) eines aktuellen oder nächsten Datenkommunikationsmodus (455) in mindestens einer Netzwerknachricht umfasst.

## Revendications

1. Procédé (500) pour la communication de données d'un dispositif mobile sur un réseau local (600), ayant un système de communication de dispositif mobile, sur une bande radiofréquence autorisée (451); le procédé (500) comprenant les étapes suivantes qui consistent :
- à déterminer (505) un mode de communication de données actuel (450), ledit mode de communication de données actuel (450) définissant au moins une bande radiofréquence (451) pour communiquer des données; ladite détermination (505) dudit mode de communication de données (450) étant effectuée en utilisant :
a) une information de localisation géographique obtenue à partir d'un réseau de communication mobile (200) ou d'un système de positionnement par satellite (300) ; ou
b) un mode de communication de données (450) obtenu à partir d'un échange de trames de données (400) sur ledit réseau local (600) ;
- si l'étape de détermination est réussie :
∘ à activer (550) un état de communication de données du dispositif mobile où l'utilisation d'une bande radiofréquence (451) définie sur la base dudit mode de communication de données actuel (450) pour une communication de données entre le dispositif mobile et le réseau local (600) est autorisée ; ou,
- si l'étape de détermination n'est pas réussie de sorte qu'aucun mode de communication de données valide (450) ne puisse être déterminé :
∘ à entrer dans un état silencieux (590) ; et
∘ à entrer en mode renifleur (580) ;
dans lequel le mode de communication de données actuel (450) est associé à une période de validité (430) et dans lequel le procédé (500) comprend en outre les étapes suivantes qui consistent :
- à vérifier (510) la validité du mode de communication de données actuel (450) sur la base d'un temps actuel (410) et de la période de validité (420), et à entrer dans un état silencieux (590) et ou une étape de détermination (505) si le résultat de l'étape de vérification est un échec,
- à recevoir la période de validité (430) pour le mode de communication de données actuel (450) dans des messages de réseau à partir d'un nœud leader actuel du réseau local (600),
- à mettre à jour le temps de validité du mode de communication de données actuel en fonction des informations transmises par le nœud leader actuel dans le réseau local,
- à activer immédiatement le nouveau mode de communication de données (455) communiqué par le nœud leader actuel du réseau local.

2. Procédé (500) selon la revendication 1, dans lequel le mode renifleur correspond à une étape d'écoute (580) d'au moins un canal dédié pour la réception d'au moins un message de réseau comprenant un mode de communication de données actuel (450) et/ou un mode de communication suivant (455).

3. Procédé (500) selon la revendication 2, comprenant une étape de réception d'au moins un message de réseau dédié comprenant un mode de communication de données actuel (450) et/ou un mode de communication suivant (455).

4. Procédé (500) selon l'une des revendications 2 et 3, dans lequel l'au moins un message comprend une période de validité (430) associée au mode de communication actuel (450).

5. Procédé (500) selon l'une des revendications 1 à 4, dans lequel l'étape de détermination (505) dudit mode de communication de données (450) qui est effectuée en utilisant une information de localisation géographique est effectuée en utilisant un référentiel (445) définissant des valeurs de modes de communication de données (450) correspondant à des zones géographiques.

6. Procédé (500) selon l'une des revendications 1 à 5, comprenant une étape de communication (560), à au moins un nœud sur le réseau local (600), d'un mode de communication de données actuel ou suivant (455) dans au moins un message de réseau.
